# EUROPÄISCHE PATENTSCHRIFT

(11) **EP 1 953 205 B1**
(45) Veröffentlichungstag und Bekanntmachung des Hinweises auf die Patenterteilung: **09.02.2011**
(21) Anmeldenummer: 07123574.1
(22) Anmeldetag: 19.12.2007
(51) Int. Cl.: C09J 133/00

(54) **Verfahren zur Reduktion des Trennwert-Anstiegs bei der Herstellung von No-Label-Look-Etiketten**
Method for reducing the increase in dividing value during the manufacture of no label' look labels
Procédé de réduction de l'augmentation de la valeur de séparation lors de la fabrication d'étiquettes No Label Look

(30) Priorität: 03.02.2007 DE 102007005508
(43) Veröffentlichungstag der Anmeldung: 06.08.2008
(73) Patentinhaber: Evonik Goldschmidt GmbH, 45127 Essen (DE)
(72) Erfinder: Ferenz, Michael, Dr., 45147, Essen (DE); Döhler, Hardi, 40221, Düsseldorf (DE); Hamann, Winfried, Dr., 45356, Essen (DE); Mund, Christian, Dr., 45149, Essen (DE); Pomorin, Juergen, 45130, Essen (DE); Tomuschat, Philipp, Dr., 45127, Essen (DE)

(56) Entgegenhaltungen:
- EP-A- 1 375 614
- EP-A- 1 583 144
- WO-A-2008/064724

## Beschreibung

Die Erfindung betrifft neuartige Laminate für No-Label-Look-Etiketten sowie die in ihnen enthaltenen Acrylat-Dispersionskleber. Sie betrifft ferner ein Verfahren zur Herstellung dieser Laminate sowie deren Verwendung zur Herstellung von selbstklebenden No-Label-Look-Etiketten.

Selbst-Klebe-Etiketten finden in einer Vielzahl von Applikationen Anwendung. Sie dienen zum Beispiel zur Aus- bzw. Kennzeichnung von Waren, Gütern, Gebrauchsgegenständen oder Behältnissen.

Vor der Applikation klebt das mit einem Haftkleber versehene Etikett im Allgemeinen auf einer so genannten Trennfolie bzw. einem Trennpapier. Hierbei handelt es sich jeweils um einen flächigen Träger, welcher mit einer Trennbeschichtung ausgestattet ist, die die Adhäsionsneigung des Haftklebers gegenüber dem Träger verringert. Dabei ist es wichtig, dass die Haftung zwischen Etikett und Träger so eingestellt ist, dass sich das Etikett vom Träger gezielt abziehen bzw. entfernen lässt. Die Haftung der Klebeetiketten auf dem Träger muss dabei so hoch sein, dass zum Beispiel bei einer maschinellen Applikation von Etiketten beim Lauf über Umlenkwalzen kein vorzeitiges Ablösen der Etiketten erfolgt. Andererseits müssen jedoch die Etiketten von der beschichteten Trägerfolie bzw. dem beschichteten Trägerpapier abziehbar sein, ohne dass ihre Klebkraft für die spätere Verwendung wesentlich beeinträchtigt wird. Die verschiedenen Haftkleber erfordern dabei verschieden abhäsiv eingestellte Trennbeschichtungen. Die Gesamtheit aus Etikett und Trennfolie bzw. Trennpapier wird als Laminat bezeichnet.

Die Kraft, die benötigt wird, um ein Etikett von dem Trennpapier bzw. der Trennfolie abzuziehen, bezeichnet man als Trennwert, der üblicherweise in cN/2,5 cm angegeben wird.

Das Trägerpapier bzw. die Trägerfolie wird mit einer Trennbeschichtung ausgerüstet, indem eine so genannte abhäsive Beschichtungsmasse auf den Träger aufgebracht und diese anschließend ausgehärtet wird.

Zur Herstellung von Trennbeschichtungen werden nach dem Stand der Technik unter anderem reaktive Siloxane eingesetzt, welche durch Temperatureinfluss, mittels ultravioletter Strahlung (UV) oder Elektronenstrahlung vernetzt werden. Im Allgemeinen wird ein geeigneter Katalysator oder Initiator zugesetzt, der durch Temperatureinfluss, UV- oder Elektronenstrahlung aktiviert wird und so die chemische Reaktion, die zur Aushärtung führt, startet.

Strahlenhärtende abhäsive Beschichtungsmassen, die nach einem radikalischen Mechanismus aushärten, sind in US-A-4 421 904, US-A-4 547 431, US-A-4 952 657, US-A-5 217 805, US-A-5 279 860, US-A-5 340 898, US-A-5 360 833, US-A-5 650 453, US-A-5 866 261 und US-A-5 973 020 sowie US-A-4 201 808, US-A-4 568 566, US-A-4 678 846, US-A-5 494 979, US-A-5 510 190, US-A-5 552 506, US-A-5 804 301, US-A-5 891 530 und US-A-5 977 282 beschrieben. Mischungen von mehreren solcher Beschichtungsmassen mit unterschiedlichen Kettenlängen und/oder Modifizierungsarten sind in US-B-6 548 568 und US-B-6 268 404 sowie der Goldschmidt Veröffentlichung "TEGO^{®} RC Silicones, Application Guide" erwähnt. Üblicherweise sind in solchen Systemen die polymerisierbaren Gruppen Acrylatgruppen.

Strahlenhärtende abhäsive Beschichtungsmassen, die nach einem kationischen Mechanismus aushärten, sind beispielsweise in US-A-5 057 549, US-A-5 231 157, US-A-4 421 904, US-A-4 547 431, US-A-4 952 657, US-A-5 217 805, US-A-5 279 860, US-A-5 340 898, US-A-5 360 833, US-A-5 650 453, US-A-5 866 261 und US-A-5 973 020 beschrieben. Üblicherweise sind in solchen Systemen die polymerisierbaren Gruppen Epoxygruppen.

Im Falle der UV-Vernetzung werden den Organosiliciumverbindungen Photoinitiatoren zugegeben. Geeignete Photoinitiatoren werden u.a. in "J.P. Fouassier, Polymerization photoinitiators: Exited state process and kinetic aspects, Progress in Organic Coating, 18 (1990), 229-252", in "J.P. Fouassier, Photochemical reactivity of UV radical photoinitiators of polymerisation: A general discussion, Recent Res. Devel. Photochem. & Photobiol., 4 (2000), 51-74", in "D. Ruhlmann et al., Relations structure-propriétés dans les photoamorceurs de polymerisation-2. Derives de Phényle Acetophenone, Eur. Polym. J. Vol. 28, No. 3, pp. 287-292, 1992" und in "K.K. Dietliker, Chemistry & Technology of UV & EB Formulation for Coatings, Inks & Paints, Volume 3, Sita Technology Ltd., UK", sowie in DE-A-102 48 111 und US-A-4 347 111 genannt.

Üblicherweise werden Selbst-Klebe-Etiketten hergestellt, indem zunächst der Träger mit einer Trennbeschichtung ausgestattet wird, so dass das Trennpapier bzw. die Trennfolie erhalten wird. Anschließend wird der Kleber auf das Trennpapier oder die Trennfolie aufgetragen und gegebenenfalls gehärtet. In einem weiteren Schritt wird der Druckträger (Face stock) zukaschiert und so das fertige Laminat erhalten. Um ein applikationsfertiges Etikett zu erhalten, wird der Druckträger in der Regel noch bedruckt und gegebenenfalls mit weiteren Ausrüstungen versehen. Schließlich kann das Etikett ausgestanzt und konfektioniert werden.

Die Farben, die für die Bedruckung verwendet werden, werden im Allgemeinen mittels UV-Bestrahlung gehärtet. Üblicherweise werden bis zu 12 Farben für einen Druck verwendet. Daher ist das Etikett einer mehrfachen UV-Bestrahlung ausgesetzt.

Seit einiger Zeit gibt es den Trend zu so genannten No-Label-Look-Etiketten, welche sich dadurch auszeichnen, dass der Druckträger eine transparente Folie ist. Üblicherweise wird solch eine Folie aus PE oder PP hergestellt. No-Label-Look-Etiketten finden insbesondere Anwendung in der Kosmetik-Industrie zur Dekoration und Auszeichnung von Personal-Care-Produkten. Als Klebstoffe finden häufig Acrylat-Dispersionskleber, aber auch Hotmelts und UV-Hotmelts Anwendung. Ein typischer wässriger Acrylat-Dispersionskleber weist einen Festkörperanteil von etwa 40 bis 60 Gew.-% auf. Davon entfallen ca. 10 bis 60 Gew.-% auf eine Polymer-Dispersion z.B. eines Acrylat-Polymers, ca. 0 bis 50 Gew.-% auf eine sog. "Tackifier"-Dispersion zum Einstellen der Klebrigkeit, ca. 0,5 bis 1,5 Gew.-% auf ein Netzmittel und ca. 0,1 bis 0,5 Gew.-% auf einen Entschäumer. Des Weiteren sind noch Verdicker und Ammoniak enthalten. Für Folienetiketten finden im Allgemeinen Dispersionskleber ohne "Tackifier" Anwendung.

Bei der Herstellung dieser No-Label-Look-Etiketten konnte beobachtet werden, dass die Kraft, die benötigt wird, um das Etikett vom Trennpapier bzw. der Trennfolie zu lösen (Trennwert), nach dem Druckvorgang im Vergleich zum unbedruckten Zustand deutlich ansteigt. Dieser Effekt kann so stark ausgeprägt sein, dass ein maschinelles Ablösen oder Spenden der Etiketten beeinträchtigt wird.

Aufgabe der vorliegenden Erfindung war es deshalb, diesen unerwünschten Anstieg des Trennwerts bei der Herstellung von No-Label-Look-Etiketten zu vermindern.

Überraschenderweise hat sich gezeigt, dass sich der zuvor beschriebene Trennwert-Anstieg bei der Herstellung von No-Label-Look-Etiketten deutlich reduzieren lässt, wenn ein Acrylat-Dispersionskleber verwendet wird, dem geringe Mengen eines geeigneten UV-Absorbers zugesetzt sind.

Gegenstand der vorliegenden Erfindung sind deshalb Acrylat-Dispersionskleber zur Herstellung von Laminaten für No-Label-Look-Etiketten enthaltend mindestens einen UV-Absorber ausgewählt aus der Gruppe bestehend aus Benzoesäureester und Benzoesäureesterderivaten, Zimtsäureester und Zimtsäureesterderivaten, Benzophenon und Benzophenonderivaten, Octocrylen, Avobenzol und Campherderivaten.

Bevorzugte Benzoesäureesterderivate sind z.B. 4-tert.-Butylphenyl-salicylat, Phenyl-salicylat, Octylphenyl-salicylat, Dibenzoyl-resorcinol, Bis-(4-tert.-butylbenzoyl)-resorcinol, Benzoyl-resorcinol, 2,4-Di-tert.-butylphenyl-3,5-di-tert.-butyl-4-hydroxy-benzoat, Hexadecyl-benzoat, Isononyl-benzoat, Octadecyl-3,5-di-tert.-butyl-4-hydroxybenzoat, 2-Methyl-4,6-di-tert.-butylphenyl-3,5-di-tert.-butyl-4-hydroxy-benzoat oder 4-Amino-benzoesäure-ethylester.

Bevorzugte Zimtsäureesterderivate sind z.B. 4-Methoxyzimtsäure-ethylester, 4-Methoxyzimtsäure-octylester, Zimtsäure-iso-amylester oder Zimtsäure-(2-ethyl)-hexylester.

Bevorzugte UV-Absorber sind auch Benzophenon und substituierte Benzophenonderivate, z. B. Oxybenzon ((2-Hydroxy-4-methoxyphenyl)-phenylmethanon) oder Dioxybenzon ((2-Hydroxy-4-methoxyphenyl)-(2-hydroxyphenyl)-methanon). Es eignen sich weiterhin Octocrylen oder Avobenzol, wie sie unter dem Handelsnamen Parsol^{®} 1789, Eusolex^{®} 9020 oder Escalol^{®} 517 erhältlich sind, aber auch Campherderivate wie 4-Methylbenzylidencampher.

Der erfindungsgemäße Acrylat-Dispersionskleber enthält vorzugsweise von 0,05 bis 2 Gew.-%, bevorzugt bis zu 1 Gew.-% UV-Absorber. So reichen bereits 0,05 bis 2 Gew.-% UV-Absorber bezogen auf den ausgehärteten Kleber (Trockenkonzentration) aus, um eine deutliche Reduktion des Trennwert-Anstiegs zu erreichen. In vielen Fällen reichen sogar bereits Konzentrationen von bis zu 1 Gew.-%. Der UV-Absorber kann dem Klebstoff in reiner Form oder als Emulsion bzw. Dispersion zugesetzt werden.

Erfindungsgemäß können alle handelsüblichen Acrylat-Dispersionskleber verwendet werden. Bevorzugt werden wässrige Acrylat-Dispersionskleber mit einem Festkörperanteil von etwa 40 bis 60 Gew.-%. Davon entfallen ca. 10 bis 60 Gew.-% auf eine Polymer-Dispersion z.B. eines Acrylat-Polymers, ca. 0 bis 50 Gew.-% auf eine sog. "Tackifier"-Dispersion zum Einstellen der Klebrigkeit, ca. 0,5 bis 1,5 Gew.-% auf ein Netzmittel und ca. 0,1 bis 0,5 Gew.-% auf einen Entschäumer. Des Weiteren können noch Verdicker und Ammoniak enthalten sein. Handelsübliche erfindungsgemäß bevorzugte Acrylat-Dispersionskleber sind beispielsweise die Produkte CR 62, CR 23 und A 220 der Fa. BASF.

Ein weiterer Gegenstand der vorliegenden Erfindung sind Laminate für No-Label-Look-Etiketten umfassend eine Trägerfolie oder ein Trägerpapier, eine strahlengehärtete abhäsive Trennbeschichtung, eine Klebeschicht und einen transparenten Druckträger, deren Klebeschicht einen erfindungsgemäßen Acrylat-Dispersionskleber enthält.

In einer bevorzugten Ausführungsform der vorliegenden Erfindung enthält die Trennbeschichtung kationisch gehärtete Epoxysiloxane, wie sie in den Produkten TEGO^{®} RC 1402, RC 1403, RC 1406 und RC 1411 der Goldschmidt GmbH enthalten sind.

In einer weiteren bevorzugten Ausführungsform der vorliegenden Erfindung enthält die Trennbeschichtung radikalisch gehärtete Siliconacrylate, wie sie in den Produkten TEGO^{®} RC 902, RC 726, RC 711, RC 708, RC 709, RC 715 und RC 706 der Goldschmidt GmbH enthalten sind.

Gegenstand der vorliegenden Erfindung ist weiterhin ein Verfahren zur Herstellung der erfindungsgemäßen Laminate umfassend die Verfahrensschritte
a) Aufbringen einer Trennbeschichtung auf eine Trägerfolie oder ein Trägerpapier,
b) Auftragen einer Klebeschicht auf die aus Schritt a) erhaltene Trennfolie bzw. das Trennpapier und gegebenenfalls Härtung derselben,
c) Kaschierung eines transparenten Druckträgers auf die in Schritt b) aufgetragene Klebeschicht,
sowie die Verwendung der erfindungsgemäßen Laminate zur Herstellung von selbstklebenden No-Label-Look-Etiketten.

### Ausführungsbeispiele:

Zur Überprüfung der anwendungstechnischen Eigenschaften wurde eine Mischung aus 70 Teilen Tego RC 902, 30 Teilen Tego RC 711 und 2 Teilen Tego Photoinitiator A 17 auf flächige Träger (biorientierte Polypropylenfolie, Poli-M 514) aufgetragen und durch Einwirkung von UV-Licht einer dem Stand der Technik entsprechenden Mitteldruckquecksilberdampflampe mit einer UV-Leistung von 50 W/cm unter Stickstoffinertisierung mit kontrolliertem Restsauerstoffgehalt von < 50 ppm bei einer Bahngeschwindigkeit von 20 m/min gehärtet. Die Auftragsmenge beträgt in jedem Fall ca. 1 g/m².

Tego RC 902, Tego RC 711 sind handelsübliche Siliconacrylate der Goldschmidt GmbH. Tego Photoinitiator A 17 ist ein handelsüblicher Photoinitiator der Goldschmidt GmbH. Die Folie Poli-M 514 wurde von Polinas (Türkei) bezogen.

Die erhaltene Trennfolie wurde mit verschiedenen Dispersionsklebern mit einem Trockenauftragsgewicht (Gewicht nach Trocknung) von ca. 20 g/qm beschichtet. Als Kleber kamen zum Einsatz CR 62, CR 23 sowie A 220 der BASF AG. Die Dispersionskleber wurden sowohl erfindungsgemäß beaufschlagt mit UV-Absorber als auch ohne UV-Absorber eingesetzt. Anschließend wurden die Kleber in einem Trockenofen bei ca. 100 °C getrocknet und mit einer PE-Folie (Groflex 85 µm PE, klar) kaschiert. Das erhaltende Laminat wurde anschließend mit einer Labor-UV-Lampe (80 W/cm), die so mit einem Transportband ausgerüstet ist, dass die Lampe mit einer Geschwindigkeit von 10 m/min passiert, einmal sowie achtmal bestrahlt.

Von den behandelten Laminaten wurde anschließend der Trennwert bestimmt.

### Trennwert-Bestimmung:

Für die Ermittlung der Trennwerte wird ein 25 mm breiter Streifen des Laminats verwendet. Zur Messung der Abhäsivität wird dieser Streifen fixiert und anschließend wird die Kraft gemessen, die benötigt wird, um das jeweilige Laminat mit einer Geschwindigkeit von 30 cm/min unter einem Schälwinkel von 180° zu trennen. Diese Kraft wird als Trennkraft oder Trennwert bezeichnet. Die allgemeine Testprozedur entspricht der Testmethode Nr. 10 der "Fédération Internationale des Fabricants et Transformateurs D'Adhésifs et Thermocollants sur Papier et autres Supports" (FINAT).

In den folgenden Tabellen sind die Ergebnisse zusammengefasst.

**Tabelle 1: Variation des UV-Absorbers**

| Verwendeter Kleber | UV-Absorber¹ | Trennwert Ohne UV-Bestrahlung [cN/2,5 cm] | Trennwert nach einer UV-Bestrahlung [cN/2,5 cm] | Trennwert nach 8-facher UV-Bestrahlung [cN/2,5 cm] |
|---|---|---|---|---|
| CR 62 (BASF) | --- | 4 | 8 | 15 |
| CR 62 (BASF) | 4-Methoxyzimtsäure-(2-ethyl-) hexylester | 4 | 4 | 12 |
| CR 62 (BASF) | Zimtsäureisoamylester | 4 | 4 | 8 |
| A 220 (BASF) | --- | 3 | 9 | 21 |
| A 220 (BASF) | 4-Methoxyzimtsäure-(2-ethyl-) hexylester | 4 | 8 | 17 |
| CR 23 (BASF) | --- | 4 | 9 | 20 |
| CR 23 (BASF) | 4-Methoxyzimtsäure-(2-ethyl-) hexylester | 3 | 7 | 17 |

| | | | | |
|---|---|---|---|---|
| ¹Trockenkonzentration des UV-Absorbers im Klebstoff = 0,6 Gew.-%. | | | | |

**Tabelle 2: Variation der UV-Absorberkonzentration**

| Konzentration des UV-Absorbers^{1,2} [Gew.-%] | Trennwert Ohne UV-Bestrahlung [cN/2,5cm] | Trennwert nach einer UV-Bestrahlung [cN/2,5cm] | Trennwert nach 8-facher UV-Bestrahlung [cN/2,5cm] |
|---|---|---|---|
| 0 | 4 | 8 | 15 |
| 0,2 | 4 | 5 | 12 |
| 0,4 | 4 | 4 | 9 |
| 0,6 | 4 | 4 | 8 |

| | | | |
|---|---|---|---|
| ¹eingesetzter Kleber: CR 62 (BASF) ²Trockenkonzentration im Klebstoff, eingesetzter UV-Absorber: Zimtsäure-isoamylester | | | |

Die Ergebnisse zeigen, dass durch die erfindungsgemäße Beaufschlagung des Klebstoffes mit UV-Absorber der Anstieg der Trennwerte nach UV-Bestrahlung deutlich reduziert werden kann.

## Patentansprüche

1. Acrylat-Dispersionskleber zur Herstellung von Laminaten für No-Label-Look-Etiketten enthaltend mindestens einen UV-Absorber ausgewählt aus der Gruppe bestehend aus Benzoesäureester und Benzoesäureesterderivaten, Zimtsäureester und Zimtsäureesterderivaten, Benzophenon und Benzophenonderivaten, Octocrylen, Avobenzol und Campherderivaten.

2. Acrylat-Dispersionskleber nach Anspruch 1 **dadurch gekennzeichnet, dass** die UV-Absorber ausgewählt sind aus der Gruppe bestehend aus 4-tert.-Butylphenyl-salicylat, Phenyl-salicylat, Octylphenyl-salicylat, Dibenzoyl-resorcinol, Bis-(4-tert.-butylbenzoyl)-resorcinol, Benzoyl-resorcinol, 2,4-Di-tert.-butylphenyl-3,5-di-tert.-butyl-4-hydroxybenzoat, Hexadecyl-benzoat, Isononylbenzoat, Octadecyl-3,5-di-tert.-butyl-4-hydroxybenzoat, 2-Methyl-4,6-di-tert.-butylphenyl-3,5-di-tert.-butyl-4-hydroxy-benzoat und 4-Amino-bezoesäüreethylester.

3. Acrylat-Dispersionskleber nach Anspruch 1 **dadurch gekennzeichnet, dass** die UV-Absorber ausgewählt sind aus der Gruppe bestehend aus 4-Methoxyzimtsäure-ethylester, 4-Methoxyzimtsäure-octylester, Zimtsäure-isoamylester und Zimtsäure-(2-ethyl)-hexylester.

4. Acrylat-Dispersionskleber nach Anspruch 1 **dadurch gekennzeichnet, dass** die UV-Absorber ausgewählt sind aus der Gruppe bestehend aus (2-Hydroxy-4-methoxyphenyl)-phenylmethanon, (2-Hydroxy-4-methoxyphenyl)-(2-hydroxyphenyl)-methanon, Octocrylen, Avobenzol und 4-Methylbenzylidencampher.

5. Acrylat-Dispersionskleber nach mindestens einem der Ansprüche 1 bis 4 **dadurch gekennzeichnet, dass** die Menge an enthaltenem UV-Absorber 0,05 bis 2 Gew.-% bezogen auf den ausgehärteten Kleber beträgt.

6. Acrylat-Dispersionskleber nach mindestens einem der Ansprüche 1 bis 4 **dadurch gekennzeichnet, dass** die Menge an enthaltenem UV-Absorber bis zu 1 Gew.-% bezogen auf den ausgehärteten Kleber beträgt.

7. Laminate für No-Label-Look-Etiketten umfassend eine Trägerfolie oder ein Trägerpapier, eine strahlengehärtete abhäsive Trennbeschichtung, eine Klebeschicht und einen transparenten Druckträger **dadurch gekennzeichnet, dass** die Klebeschicht einen Acrylat-Dispersionskleber nach mindestens einem der Ansprüche 1 bis 6 enthält.

8. Laminate nach Anspruch 7 **dadurch gekennzeichnet, dass** die Trennbeschichtung kationisch gehärtete Epöxysiloxane enthält.

9. Laminate nach Anspruch 7 **dadurch gekennzeichnet, dass** die Trennbeschichtung radikalisch gehärtete Siliconacrylate enthält.

10. Verfahren zur Herstellung von Laminaten für No-Label-Look-Etiketten umfassend die Verfahrensschritte
a) Aufbringen einer Trennbeschichtung auf eine Trägerfolie oder ein Trägerpapier,
b) Auftragen einer Klebeschicht auf die aus Schritt a) erhaltene Trennfolie bzw. Trennpapier und ggf. Härtung derselben,
c) Kaschierung eines transparenten Druckträgers auf die in Schritt b) aufgetragene Klebeschicht,
**dadurch gekennzeichnet, dass** für die Auftragung der Klebeschicht ein Acrylat-Dispersionskleber nach mindestens einem der Ansprüche 1 bis 5 verwendet wird.

11. Verwendung von Laminaten nach mindestens einem der Ansprüche 7 bis 9 zur Herstellung von selbstklebenden No-Label-Look-Etiketten.

## Claims

1. Acrylate dispersion adhesive for producing laminates for "no label look" labels, containing at least one UV absorber selected from the group consisting of benzoic esters and benzoic ester derivatives, cinnamic esters and cinnamic ester derivatives, benzophenone and benzophenone derivatives, octocrylene, avobenzene and camphor derivatives.

2. Acrylate dispersion adhesive according to Claim 1, **characterized in that** the UV absorbers are selected from the group consisting of 4-tert-butylphenyl salicylate, phenyl salicylate, octylphenyl salicylate, dibenzoylresorcinol, bis(4-tert-butylbenzoyl)-resorcinol, benzoylresorcinol, 2,4-di-tert-butylphenyl 3,5-di-tert-butyl-4-hydroxybenzoate, hexadecyl benzoate, isononyl benzoate, octadecyl 3,5-di-tert-butyl-4-hydroxybenzoate, 2-methyl-4,6-di-tert-butylphenyl 3,5-di-tert-butyl-4-hydroxybenzoate and ethyl 4-aminobenzoate.

3. Acrylate dispersion adhesive according to Claim 1, **characterized in that** the UV absorbers are selected from the group consisting of ethyl 4-methoxycinnamate, octyl 4-methoxycinnamate, isoamyl cinnamate and 2-ethylhexyl cinnamate.

4. Acrylate dispersion adhesive according to Claim 1, **characterized in that** the UV absorbers are selected from the group consisting of (2-hydroxy-4-methoxyphenyl)phenylmethanone, (2-hydroxy-4-methoxyphenyl)-(2-hydroxyphenyl)methanone, octocrylene, avobenzene and 4-methylbenzylidenecamphor.

5. Acrylate dispersion adhesive according to at least one of Claims 1 to 4, **characterized in that** the amount of UV absorber present is 0.05% to 2% by weight, based on the cured adhesive.

6. Acrylate dispersion adhesive according to at least one of Claims 1 to 4, **characterized in that** the amount of UV absorber present is up to 1% by weight, based on the cured adhesive.

7. Laminate for "no label look" labels, comprising a backing film or backing paper, a radiation-cured abhesive release coating, an adhesive layer and a transparent face stock, **characterized in that** the adhesive layer contains an acrylate dispersion adhesive according to at least one of Claims 1 to 6.

8. Laminate according to Claim 7, **characterized in that** the release coating contains cationically cured epoxysiloxanes.

9. Laminate according to Claim 7, **characterized in that** the release coating contains free-radically cured silicone acrylates.

10. Process for producing laminates for "no label look" labels, comprising the steps of
a) applying a release coating to a backing film or backing paper,
b) applying an adhesive layer to the release film or release paper obtained from step a) and curing it if desired,
c) laminating a transparent face stock onto the adhesive layer applied in step b),
**characterized in that** an acrylate dispersion adhesive according to at least one of Claims 1 to 5 is used for the application of the adhesive layer.

11. Use of laminates according to at least one of Claims 7 to 9 for producing self-adhesive "no label look" labels.

## Revendications

1. Colle à base de dispersion d'acrylate pour la production de stratifiés pour étiquettes No-Label-Look contenant au moins un absorbeur UV choisi dans le groupe constitué par des esters d'acide benzoïque et des dérivés d'esters d'acide benzoïque, des esters d'acide cinnamique et des dérivés d'esters d'acide cinnamique, la benzophénone et des dérivés de benzophénone, l'octocrylène, l'avobenzène et des dérivés de camphre.

2. Colle à base de dispersion d'acrylate selon la revendication 1, **caractérisée en ce que** les absorbeurs UV sont choisis dans le groupe constitué par le salicylate de 4-tert-butylphényle, le salicylate de phényle, le salicylate d'octylphényle, le dibenzoyl-résorcinol, le bis-(4-tert-butylbenzoyl)-résorcinol, le benzoyl-résorcinol, le 4-hydroxybenzoate de 2,4-di-tert-butylphényl-3,5-di-tert-butyle, le benzoate d'hexadécyle, le benzoate d'isononyle, le 4-hydroxybenzoate d'octadécyl-3,5-di-tert-butyle, le 4-hydroxybenzoate de 2-méthyl-4,6-di-tert-butylphényl-3,5-di-tert-butyle et le 4-aminobenzoate d'éthyle.

3. Colle à base de dispersion d'acrylate selon la revendication 1, **caractérisée en ce que** les absorbeurs UV sont choisis dans le groupe constitué par le 4-méthoxycinnamate d'éthyle, le 4-méthoxycinnamate d'octyle, le cinnamate d'isoamyle et le cinnamate de (2-éthyl)-hexyle.

4. Colle à base de dispersion d'acrylate selon la revendication 1, **caractérisée en ce que** les absorbeurs UV sont choisis dans le groupe constitué par la (2-hydroxy-4-méthoxyphényl)-phénylméthanone, la (2-hydroxy-4-méthoxyphényl)-(2-hydroxyphényl)-méthanone, l'octocrylène, l'avobenzène et le 4-méthyl-benzylidènecamphre.

5. Colle à base de dispersion d'acrylate selon au moins l'une des revendications 1 à 4, **caractérisée en ce que** la quantité d'absorbeur UV contenu vaut de 0,05 à 2 % en poids, par rapport à la colle durcie.

6. Colle à base de dispersion d'acrylate selon au moins l'une des revendications 1 à 4, **caractérisée en ce que** la quantité d'absorbeur UV contenu vaut jusqu'à 1 % en poids, par rapport à la colle durcie.

7. Stratifiés pour étiquettes No-Label-Look, comprenant un film de support ou un papier de support, un revêtement de séparation antiadhésif durci par irradiation, une couche de colle et un porteur d'impression transparent, **caractérisés en ce que** la couche de colle contient une colle à base de dispersion d'acrylate selon au moins l'une des revendications 1 à 6.

8. Stratifiés selon la revendication 7, **caractérisés en ce que** le revêtement de séparation contient des époxysilanes durcis par voie cationique.

9. Stratifiés selon la revendication 7, **caractérisés en ce que** le revêtement de séparation contient des silicone-acrylates durcis par voie radicalaire.

10. Procédé pour la production de stratifiés pour étiquettes No-Label-Look, comprenant les étapes de processus
a) application d'un revêtement de séparation sur un film de support ou un papier de support,
b) application d'une couche de colle sur le film de séparation ou le papier de séparation obtenu dans l'étape a) et éventuellement durcissement de celle-ci,
c) contre-collage d'un porteur d'impression transparent sur la couche de colle appliquée dans l'étape b),
**caractérisé en ce qu'**on utilise pour l'application de la couche de colle une colle à base de dispersion d'acrylate selon au moins l'une des revendications 1 à 5.

11. Utilisation de stratifiés selon au moins l'une des revendications 7 à 9, pour la fabrication d'étiquettes No-Label-Look autocollantes.
